Europäisches Patentamt

(19) European Patent Office

Office européen des brevets

(11) Publication number: **0 172 637**
**A1**

(12) **EUROPEAN PATENT APPLICATION**

(21) Application number: **85304743.9**

(22) Date of filing: **03.07.85**

(51) Int. Cl.⁴: **B 25 J 15/02**
**B 65 G 61/00**

(30) Priority: **13.07.84 JP 105115/84 U**

(43) Date of publication of application:
**26.02.86 Bulletin 86/9**

(84) Designated Contracting States:
**CH DE FR GB LI**

(71) Applicant: **Fuji Yusoki Kogyo Kabushiki Kaisha
5814 Onoda
Onoda-shi Yamaguchi-ken(JP)**

(72) Inventor: **Yoshioka, Ikuo
No. 5417 Nogurumi Onoda-shi
Yamaguchi-ken(JP)**

(74) Representative: **Luckhurst, Anthony Henry
William et al,
STANLEY, POPPLEWELL, POOLE 57 Lincoln's Inn Fields
London WC2A 3LS(GB)**

(54) **Robot hand for stacking boxes.**

(57) A robot hand for stacking boxes V, Z comprises pivoted arms $F_1$, $F_2$ having hook portions $k_1$, $k_2$ which engage flanges i on a box to lift the box. The arms $F_1$, $F_2$ are rotated apart to drop the box V in position on a lower box Z. By positioning the hook portion $k_1$, $k_2$ at different heights the box V is held at a slant so that a first lower corner of a projection 14 of the box V can be engaged with the underneath box Z, internally of the flange $t_1$, before releasing the suspended box V by rotating the hook $F_2$. Hook $F_1$ serves to limit sideways movement of the box as hook $F_2$ is released. The invention provides for more positive location of boxes during stacking without the vibration and shock experienced in the prior art method where both hooks are released at the same time to drop the box, the hook portions being at the same height.

Fig. 1

## ROBOT HAND FOR STACKING BOXES

This invention relates to a robot hand for stacking boxes in which lower ends of forks for supporting flanges provided at the upper end of a box are set at a predetermined level difference in a vertical direction.

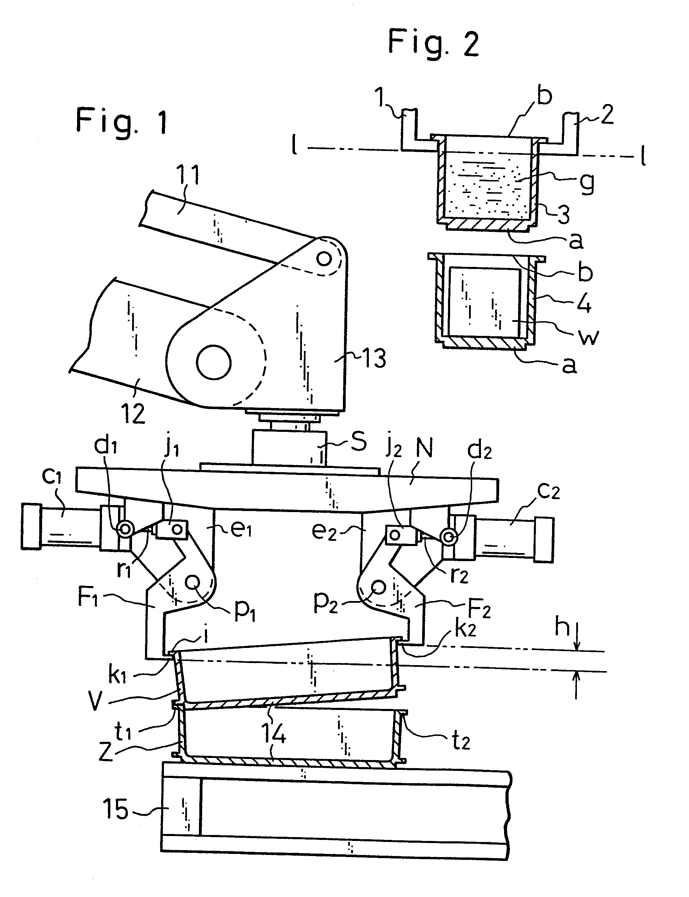

Robots are widely used as one of means for labour-saving in the transfer, stacking and disassembling of freight or goods to enhance efficiency during loading and unloading operations. Generally, forks 1 and 2 provided opposite each other on a robot hand have their positions for gripping a box 3 at the same level, line $\ell - \ell$, as shown in Fig. 2. Therefore, when freight, particularly boxes 3 having a projecting portion $a$ at the lower end thereof as shown are successively aligned and stacked vertically by means of the projecting portion $a$, the box 3 suspended and supported by the forks 1 and 2 is positioned directly above an open portion $b$ at the upper end of a box 4 directly therebelow, and then the forks 1 and 2 are simultaneously spread apart to drop the box 3. However, the forks 1 and 2 are not always spread apart simultaneously through the same angle. When material in the box 3 is of, for example, powder or granular material $g$ such as cement, sugar and cereals, there is a danger that the box 3 itself may be tilted and the projecting portion $a$ may fall in its inclined state relative to the open portion $b$, directly below the projected portion $a$ immediately after the forks 1 and 2 have been spread apart due to the variation of the position of the center of gravity of the material. Furthermore, there is a possibility that the box 4 directly below the box 3 undergoes vibration and shock due to the weight of the material $g$ within the box 3 to be dropped failing to always hold the box 4 at a given position, and therefore, the suspending and gripping position of the box 3 to be dropped by the forks 1 and 2 cannot be set at a given position and the position of the forks 1 and 2 unavoidably needs to be adjusted every time the operation takes place. As a consequence, this leads to one main factor which impairs the enhancement of working efficiency. Moreover, there is a further possibility that the box 4 directly below the box 3 and material w therein when solid are sometimes damaged and cracked due to the weight of material within the box 3 to be dropped. Accordingly, the stacking operation of the boxes 3 and 4 by the simultaneous spreading of the forks 1 and 2 opposed to each other and positioned at the same level is not always performed vertically and orderly, and sometimes considerable labour and time are required for adjustment.

It is therefore an object of the present invention to provide an arrangement wherein rectangular boxes each having a projecting portion at a lower end thereof are always stacked at a predetermined position positively, easily and vertically to prevent freight from getting out-of-shape.

It is a further object of the present invention to provide an arrangement wherein vibration and shock at the time of stacking boxes vertically are suppressed to be as small as possible to prevent the boxes and contents therein from being undesirably cracked, deformed or damaged.

This invention particularly provides a robot hand for stacking boxes in which lower ends of a pair of forks opposed to each other for supporting flanges of a lengthwise box formed at its lower end with a projecting portion are given before-hand a level difference in a vertical direction.

Since the setting position of a pair of forks opposed to each other are at a predetermined level difference, a box is held in an inclined fashion by the forks through a flange. A projecting portion of the suspended box can be inserted into an inner surface on one side of a flange of a box held before-hand at a predetermined position by one fork, and then the other fork can be spread open to positively insert the other projected portion of the box into an inner surface on the other side of a flange of a box directly therebelow. Therefore, the stacked boxes are connected in an orderly manner and stacked in a vertical direction through the projected portions, free from the possibility of unexpected out-of-shape of boxes. Moreover, a box positioned directly below the above-positioned box hardly undergoes vibration and shock as compared with conventional stacking means which has been suffered from a most probable danger that the box positioned directly below undergoes violent vibration and shock due to the dropping of the suspended box to make the setting position unstable. Therefore, the setting position can be always held constant, and thus the suspended box can be always stacked at the same position to provide actual advantages such that there is no waste of time and boxes are freed from damages, cracks and the like.

The invention will be further described by way of example with reference to the accompanying drawings, in which:

Fig. 1 illustrates a box stacking state in accordance with the present invention; and

Fig. 2 illustrates a conventional box stacking state.

An embodiment of the present invention will be described hereinafter with reference to Fig. 1. Arms (not shown) are juxtaposed above a turning body rotatably supported on a base frame set at a predetermined position. A guide rod 11 and a link 12 are respectively pivotally mounted on the ends of these arms, and a suspending body S is rotatably suspended below a retainer body 13 movably hung from the guide rod 11. Support pieces $e_1$ and $e_2$ are secured to and hung from both sides of a bed board N coupled integral with the suspending body S. One end of cylinders $C_1$ and $C_2$ are pivotally mounted on support shafts $d_1$ and $d_2$, respectively, which are laterally mounted on the support pieces $e_1$ and $e_2$. Connecting pieces $j_1$ and $j_2$ are

coupled to ends of piston rods $r_1$ and $r_2$ secured to pistons (not shown) slidably closely fitted in the cylinders $C_1$ and $C_2$. Middle portions of forks $F_1$ and $F_2$ formed integral with the connecting pieces $j_1$ and $j_2$ are rotatably pivotally mounted on support shafts $p_1$ and $p_2$, respectively, provided below the support pieces $e_1$ and $e_2$. Then, setting positions of bent pieces $k_1$ and $k_2$ at the ends of the forks $F_1$ and $F_2$, respectively, are held before-hand at a predetermined level difference $\underline{h}$ in a vertical direction whereby when a flange $\underline{i}$ at the upper end of a box V having a projecting portion 14 at the lower end thereof is supported at a lower side thereof, the box V is inclined and held as shown by the solid line in Fig. 1. In the drawing, reference numeral 15 designates a place bed for stacking boxes; Z, a box on the place bed 15; and $t_1$ and $t_2$, flanges on both sides of the box Z.

The flange $\underline{i}$ of the box V is engaged and supported by the bent pieces $k_1$ and $k_2$ of the forks $F_1$ and $F_2$ to suspend and hold the box in an inclined state as shown by the solid lines, then one end (left end in the illustrated embodiment) of the projecting portion 14 of the box V is inserted internally of the flange $t_1$ on one side (left side in the illustrated embodiment) of the box Z already placed on the place bed 15, and thereafter the fork $F_2$ is rotated counterclockwise and spread open by the advancement of the piston rod $r_2$ in the cylinder $C_2$ to drop and insert the other end (right end in the illustrated embodiment) of the projected portion 14 of the box V inside the flange $t_2$ of the box Z. In this case, the fork $F_1$ is retained at a position shown by the solid line as shown to prevent the box V from being uselessly "deviated", that is, the fork $F_1$ functioning as a so-called stopper. After the projected portion 14 of the box V has been inserted inside the flange $t_2$ of the box Z, the piston rod $r_1$ in the cylinder $C_1$ is advanced to rotate the fork $F_1$ clockwise and spread thereby completely disengaging the fork $F_1$ from the flange $\underline{i}$ of the box V thus terminating the

- 5 -          **0172637**

stacking operation of the box V onto the box Z.  In this manner, the robot awaits the preparation of the stacking operation for a next box.

While in the above-described explanation, stacking of boxes with flanges having a projected portion at the lower end thereof has been described, it should be noted that the present invention is not limited thereto but can be also applied to boxes with flanges and in which a lower end is flat.

CLAIMS:

1. A robot hand for stacking boxes (V,Z) having flanges (i) formed at upper ends thereof, the robot hand comprising a pair of opposed forks, ($F_1$, $F_2$) and hook portions ($k_1$, $k_2$) at lower ends of the forks ($F_1$, $F_2$) for engaging the flanges (i), characterised in that the hook portions ($k_1$, $k_2$) are set at different relative vertical heights before a box is stacked.

2. A robot hand for stacking boxes (V,Z) having flanges (i) formed at upper ends thereof and a projecting portion (14) at a lower end thereof, the robot hand comprising a pair of opposed forks ($F_1$, $F_2$), and hook portions ($k_1$, $k_2$) at lower ends of said forks ($F_1$, $F_2$) for engaging the flanges (i), the hook portions ($k_1$, $k_2$) being bent horizontally towards the box (V, Z) characterised in that the hook portions ($k_1$, $k_2$) are set at different relative vertical heights before stacking.

3. A robot hand for stacking boxes according to claim 1 or 2, characterised in that a box to be stacked is held in an inclined fashion by the pair of forks ($F_1$, $F_2$).

4. A robot hand for stacking boxes according to claim 1, characterised in that the box formed with flanges (i) at the upper end thereof is not formed with a projecting portion (14) at the lower end.

5. A robot hand for stacking boxes according to claim 2, characterised in that during stacking, one end of the projecting portion (14) of the upper box (V) is fitted in and held by internal sides of the flanges of the lower box.

6. A robot hand for stacking boxes or the like, having arms ($F_1$, $F_2$) for gripping and lifting and depositing a box, characterised in that means is provided holding a box (V) with its base in an inclined orientation relative to a lower box (Z) prior to depositing the box thereupon.

7. A robot hand as claimed in claim 6, characterised in that the arms ($F_1$, $F_2$) have hook means ($k_1$, $k_2$) for engaging with formations (i) provided on the box (V), and said hook means ($k_1$, $k_2$) are arranged at different relative heights.

8. A method of stacking boxes by means of a robot, wherein a box (V) is lifted by a hand of the robot, positioned over a lower box (Z) and then released by the robot hand to engage the lower surface of the upper box (V) with an upper receiving surface of the lower box, characterised in that the robot hand holds the box (V) with its lower surface inclined relative to the upper receiving surface of the lower box (Z) and said lower surface is partially engaged with the upper surface before the box (V) is released by the robot hand.

Fig. 2

Fig. 1

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | PATENTS ABSTRACTS OF JAPAN, vol. 8, no. 234 (M-334)[1671], 26th October 1984; & JP - A - 59 114 223 (OKURA YUSOKI K.K.) 02-07-1984 * Abstract; figures 1,6,7 * | 1-3,5-8 | B 25 J 15/02 B 65 G 61/00 |
| | --- | | |
| Y | DE-A-2 635 859 (HOLSTEIN UND KAPPERT AG) * Page 5, line 12 - page 6, line 4 and lines 10-12 * | 1-3,5-8 | |
| | --- | | |
| Y | DE-A-2 724 978 (H. SCHAEFER KG, FÖRDERANLAGEN MASCHINENFABRIK) * Page 8, line 16 - page 9, line 12 * | 1-3,5-8 | |
| | --- | | **TECHNICAL FIELDS SEARCHED (Int. Cl 4)** |
| Y | EP-A-0 001 686 (ICI LTD.) * Claims 1,4 * | 1-3,5-8 | |
| A | | 4 | B 25 J B 65 G |
| | --- | | |
| A | US-A-2 796 179 (VAN VLECK) * Figure 15 * | 4 | |
| | --- | | |
| A | DE-B-1 277 749 (HOLSTEIN UND KAPPERT MASCHINENFABRIK PHOENIX) * Column 3, lines 27-30 * | 2 | |
| | --- -/- | | |

The present search report has been drawn up for all claims

| Place of search THE HAGUE | Date of completion of the search 02-09-1985 | Examiner LAMMINEUR P.C.G. |
|---|---|---|

Eurcpean Patent
Office

**EUROPEAN SEARCH REPORT**

0172637

Application Number

EP 85 30 4743

| **DOCUMENTS CONSIDERED TO BE RELEVANT** | | | Page 2 | |
|---|---|---|---|---|
| Category | Citation of document with indication, where appropriate, of relevant passages | Relevant to claim | CLASSIFICATION OF THE APPLICATION (Int. Cl.4) | |
| A | DE-A-2 001 848 (GENOSSENSCHAFT DEUTSCHER BRUNNEN) | | | |
| | --- | | | |
| A | US-A-3 680 904 (ADIE) | | | |
| | ----- | | | |
| | | | TECHNICAL FIELDS SEARCHED (Int. Cl.4) | |

| The present search report has been drawn up for all claims | | |
|---|---|---|
| Place of search THE HAGUE | Date of completion of the search 02-09-1985 | Examiner LAMMINEUR P.C.G. |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons

& : member of the same patent family, corresponding
      document

EPO Form 1503 03 82